# EUROPEAN PATENT APPLICATION

(11) **EP 4 787 211 A1**
(43) Date of publication of application: **05.08.2026**
(21) Application number: 25154991.1
(22) Date of filing: 30.01.2025
(51) Int. Cl.: G06F 21/64, H04L 9/32, H04L 9/00

(54) **SYSTEM AND METHODS FOR VERIFIABLE COMPUTING, COMMUNICATIONS AND DATA MANAGEMENT**

(71) Applicant: Verifiable Computing Systems Limited, Wexford Wexford Y35 WR02 (IE)
(72) Inventor: Murray, Fergal, Wexford (IE); Henry, Matthew, Wexford (IE)
(74) Representative: Gillespie, Richard

(57) **Abstract**

The present disclosure is directed towards method and systems for managing data comprising: appending a block to a centralised topic block-chain wherein: the appended block comprises a hash of the preceding block; the appended block is a genesis block; and the genesis block is the first block in a subtopic block-chain relating to an attribute of the topic block-chain, wherein the subtopic block-chain provides a parallel and hierarchical record structure of event blocks, whereby: the centralised topic block-chain is used to store topic-level records and serves as the root of the hierarchy; and the subtopic block-chain is used to store topic-level records of events relating to an update of an attribute of a topic provide a verifiable record of the updates to the attribute.

## Description

The present disclosure is directed towards providing a system for verifying data to improve the integrity and confidentiality of the data.

### Background

There are many cases where multiple entities need to coordinate, collaborate or share data over a prolonged period, to achieve a desired outcome. This particularly the case where the data relates to a particular topic. As used in the present disclosure, the term 'topic' refers to the 'target' which a collection of data refers to. To put it differently, data is stored about a topic and this data is referred to in this disclosure as topic data. For example, a topic could be a natural person and the topic data could be the personal data of the natural person, or the topic could be one or more natural persons and the topic data could incorporate the personal data of the one or more natural persons. Alternatively, the topic could be one or more real estate transactions, and the topic data could be data relating to the one or more real estate transactions.

In cases where the topic is a natural person, it may be desirable or necessary for some or all of the entities to be able to communicate with each other with confidence that the topic data (i.e. the data relating to the topic) is not routinely accessed by the natural person for some or all of these communications.

At present, there is no successful way for one entity to successfully trust that another entity has accurately stored an up-to-date collection of topic data. As a result, each entity typically maintains their own copy of some or all of the topic data about a topic in case. This is further required in case there is a dispute with one of the other entities over the topic data (e.g. when two entities have copies of the topic data which differ in content). As will be apparent to those skilled in the art, this involves significant data management issues as well the inefficient storage of multiple versions of topic data about a single topic. In some cases, there are also statutory requirements governing data access, correction, retention and deletion of data which also exposes those managing the storage of topic data to the risk of significant legal liability.

Further, as a result of this, updates to topic data needs to be propagated to all entities storing topic data to ensure the topic data is up to date. With increasing numbers of entities storing topic data there are increasing risks that updates will be transmitted via insecure channels such as email, and messaging applications, or that updates will not be received.

This also leads to problems with data integrity (i.e. a storage means may not be configured to alert a user that a data update was missed, or the system may depend on manual step to provide data in an email to a database which exposes the risk of data entry errors) and confidentiality and make it difficult or impossible to know with certainty the current status, history, or who has access to or has accessed the topic data.

The above problems are being exacerbated by the deployment of artificial intelligence technologies to communicate with customers or make consequential recommendations or decisions. In particular, if the data used to train the AI for such ends is inaccurate there is a risk of the AI providing harmful outputs. Further, there on certain applications there is a need to highly accurate outputs. Therefore, it is increasingly desirable to have reliable, complete, and independently verifiable records of all the human and automated decisions taken in respect of a topic.

As such there is a continuing need to enable multiple entities who do not fully trust each other to be able to access one or more of:
1. a shared independent single source of truth ("SSSOT") about a topic, including current status with independently verifiably end-to-end data integrity;
2. the topic data associated with the topic, preferably including a historical record of updates including state changes, recommendations, decisions or actions taken by people, organisations, or automated systems;
3. communication means facilitating the sharing of topic data with some or all of the other entities while preserving confidentiality of the communications, preferably without diminishing the system's overall data integrity.

Such a system preferably enables such entities to have sufficient confidence in the data integrity and persistence of the SSSOT that they are willing to forgo maintaining independent local data repositories under their own administrative systems thereby reducing the storge needs for storing topic data.

Additionally, such a system preferably enables tasks to be delegated to AI agents or chains of AI agents. In particular, tasks may be safely delegated as the integrity and auditability of all interactions made by AI agents or chains of agents to which the tasks have been delegated can be ensured by providing an SSSOT containing mathematically verifiable tracing for all such interactions. Furthermore, chains of authority and liability may be memorialized within the system as a contagious chain of verifiable entries.

As a further advantage, such a system will provide a mechanism for data subjects to assert sovereignty over their personal data, while allowing participating entities to share data without the formal consent of the data subject if the circumstances require it. As used herein, a data subject is a natural person. Where the topic is a natural person, the data subject is that natural person. Alternatively, where the topic relates to one or more natural persons (e.g. a real estate transaction) the data subject is one of the natural persons to which the topic relates.

The above points are illustrated by the following examples:

### Healthcare

In the field of healthcare a topic can be a person's medical history. Different organizations including primary healthcare providers, insurers, hospitals, and consultants may maintain topic data about the topic - for example: medical records, including diagnostics, test results, medical history, prescriptions, etc. These organisations need to share topic data with each other to ensure continuity of care. Further, they may need to share topic data about without consent of the data subject in the event of an emergency. It may also be undesirable to share all of the topic data (e.g. data relating to communications between the professionals) with the data subject because at least some of the topic data could require elaboration or interpretation to make it comprehensible to the data subject.

A system according to the present disclosure facilitates the better sharing of medical information, preferably giving the data subject control over who gets access to their topic data, and more preferably allowing medical professionals to share data effectively so that they can act rapidly in emergency situations.

### Property Conveyancing

In the field of property conveyancing, a topic may be a property transaction. Executing such a transaction requires the sharing of topic data between lawyers, estate agents, and lenders. For example, the topic data may include personal data relating to the buyers and sellers which must be shared and processed to certify marketable title, complete the conveyancing and mortgage transactions and perfect the transfer of title to the buyer.

A system according to the present disclosure could speed and simplify transactions by providing all entities with a shared and trusted data record that provides clarity on the outstanding items that need to be completed in addition to reducing the amount of data that needs to be stored and avoiding the risk of entities having versions of the topic data which comprise differing data.

### Education

In the field of education, a topic may be the academic history of a data subject (in this case a student). Different educational institutions need to share information about the data subject's academic history and add or update that information over time. They may need to track multiple different dimensions of academic performance or credentials and may need to selectively share topic data with other institutions and organisations for example to track compliance with continuous professional development requirements, or progress during professional placements.

### Customer Service and Support

In the field of customer service, a topic may be the interactions of a data subject (e.g. a customer) with a supplier (e.g. a telecommunications provider, a financial institution, a utility, etc). A common problem is that when accessing a services that requires topic data, a data subject contacts support staff with varying levels of expertise who may not be able to access a complete version of the topic data. This is especially a problem where different departments within a supplier have differing versions of the data subject's topic data. Further, recent improvements in AI are likely to lead to the rapid replacement of human support staff with AI in frontline customer service and support roles, with the potential for reduced quality of service and reduced accountability from suppliers. As such, as well the constant need to reduce data storage costs, there is a growing need for suppliers to provide transparency and accountability which are facilitated by a system according to the present disclosure.

Attempts have been made to address the above problems. For example, the use of decentralized blockchains is well known. However, as illustrated in US 2017/0054611, not all entities in a decentralized blockchain system may be trusted. US 2017/0054611 seeks to mitigate this problem by including a trust rating in the blockchain data. However, the use of a decentralized blockchain does not address the duplication caused by storing multiple versions of the same data and the associated problems of maintaining data coherency. Further, while the use of a trust rating may mitigate risk, it does not eliminate the risk of a topic data being shared with a malicious entity, nor is it suitable for managing access to the blockchain, irrespective of whether the access is to read from, write to, or proof work associated with the blockchain.

Another technique that has been used, either independently or in combination with the use of blockchain, is the use of digital signatures. However, there are continuing issues with the long-term validity of digital signatures. As technology continues to advance, digital signatures become less secure if they aren't kept up to date. Further, a signature merely verifies that a message has come from a given source - it does not help address the problem of keeping topic data coherent e.g. if one entity does not receive the message.

### Object

Thus, the present disclosure is directed towards addressing the problems with prior art solutions and to providing an improved method and system for topic data verification.

### Summary

The present disclosure is directed towards systems and methods, the features of which are set out in the appended claims. In particular, the present disclosure is directed towards a computer-implemented method for managing data comprising: appending a block to a centralised topic block-chain wherein: the appended block comprises a hash of the preceding block; the appended block is a genesis block; and the genesis block is the first block in a subtopic block-chain relating to an attribute of the topic block-chain, wherein the subtopic block-chain provides a parallel and hierarchical record structure of event blocks, whereby: the centralised topic block-chain is used to store topic-level records and serves as the root of the hierarchy; and the subtopic block-chain is used to store topic-level records of events relating to an update of an attribute of a topic provide a verifiable record of the updates to the attribute.

Preferably, a plurality of genesis blocks may be appended to the same block in the centralised topic block-chain wherein each genesis block relates to a different attribute of the same topic.

Preferably, a block in the centralised topic block-chain comprises a unique identifier configured to identify the topic.

Preferably, a block in the centralised topic block-chain comprises one or more attributes of the topic.

Preferably, the attributes comprise one or more of: changes in the topic's status, one or more communications between entities regarding the topic, a digital file, including any revision thereof associated with the topic, data identifying the portion of topic data being shared, data identifying the entity who granted access, data identifying the entity who received access, data identifying the reason rational for sharing, data identifying one or more instances of access to the shared data, or data identifying revocation of access to the shared topic data.

Preferably, the method comprises adding a subtopic block to a subtopic block chain, wherein the subtopic block comprises a hash of the previous subtopic block, and the subtopic block comprises an event relating to the attribute of the topic, whereby the subtopic block provides a a log of events, such as state changes, data updates, and permissions modifications.

Preferably, the method comprises adding a close block to the topic blockchain wherein the close block is configured to make topics and the one or more subtopics in the topic block chain immutable.

Preferably, the method comprises adding a checkpoint block to the topic blockchain wherein the checkpoint block is configured to provide a record of the status without making topics and the one or more subtopics in the topic block chain immutable.

Preferably, the method comprises providing a verification seal for blocks, providing a visual indicator of data integrity wherein the verification seal verifies that the hash of a block matches the hash of the next block in the blockchain.

Preferably, the method comprises providing a notification to the user of a blockchain of the addition of a block the blockchain wherein the blockchain is either a topic or subtopic blockchain.

Preferably, a topic blockchain has a first set of users and a subtopic blockchain related to the topic block chain has a second set of users wherein the first set of users does not match the second set of users.

The present disclosure is also directed towards a data processing system comprising means for carrying out a method as set out above. Further, the present disclosure is also directed towards a computer program, computer-readable storage medium, or a data carrier comprising instructions which, when executed by a computer, cause the computer to perform a method as set out above.

### Brief Description of the Drawings

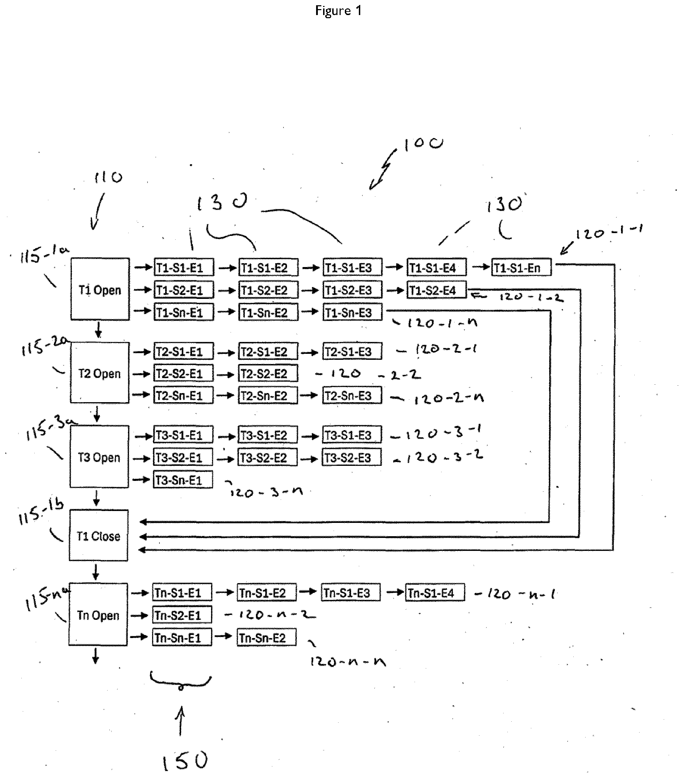

The invention will be more clearly understood from the following description of an embodiment thereof, given by way of example only, with reference to the accompanying drawings, in which:-
Figure 1 shows a logical schematic of a system in accordance with the present disclosure.

### Detailed Description

A system in accordance with the present disclosure is configured to enable multiple entities which do not trust each other to securely share topic data. To this end the system is configured to enable an entity to easily and independently verify the completeness and integrity of topic data. The topic data may include one or more the status of the topic, a history of the status of the topic, computations relating to the topic, or communications regarding the topic. For example, the topic data may be configured to include:
- the history of events relating to the topic, including but not limited to
   o changes in the topic's status,
   o one or more communications between entities regarding the topic,
   o a digital file, including any revision thereof associated with the topic,
   o an opinion, recommendation, judgment or action by any person or any automated process (for example an AI system), which may include:
      - data identifying the person or system that made the decision (which, in the case of software, including the software version and configuration parameters or training data set)
      - data identifying any reasoning provided for the opinion, recommendation, judgment or action.
- the history of data sharing of topic data about the topic including
   o data identifying the portion of topic data being shared
   o data identifying the entity who granted access
   o data identifying the entity who received access
   o data identifying the rational for sharing (e.g. the purpose, the legal basis, etc.)
   o data identifying one or more instances of access to the shared data
   o data identifying revocation of access to the shared topic data
   o other data attributes associated with or part of the topic data

A system according to the present disclosure comprises a centralized blockchain system. Preferably the centralized blockchain system is a multi-blockchain system. The system is configured to manage topic data. Preferably the system also records changes to the topic data. Preferably, the system also audits topic data. The topic data is data related to one or more topics among distributed entities within a limited trust framework. Preferably the topic data includes meta data relating to the one or more topics.

In particular, a centralized blockchain 100 is used to manage the topic data relating to particular topic. With reference to figure 1, the centralized blockchain 100 comprises a primary blockchain, which is referred to in this disclosure as the topic blockchain 110. The centralized blockchain 100 preferably further comprises one or more secondary blockchains associated with the primary blockchain. These secondary blockchains are referred to in this disclosure as subtopic blockchains 120. The use of subtopic blockchains 120 forms a parallel and hierarchical record structure of event blocks 130 within the topic and/or subtopic blockchains. An event block 130 is a discrete block of data which stores and preserves data relating to an update of the topic data. The topic block chain 110 may comprises blocks associated with more than one topic T1, T2, ..., Tn. As such the topic block chain 110 is suitable for handling a project or the like.

The system preferably comprises a data store, such as a database. Preferably, the data store is a relational data store, such as a relational database. The data store is configured to store data about the topic blockchain. For example, the data store may be configured to store one or more of:
- a topic's attributes;
- data blobs storing information about the topic (as used in this disclosure, a data blob is data binary large object - i.e. a single large block of data stored in a storage system such as a database. A data blob may store a large chunk of data, document types, or media files like audio or video files. A blob field in a database allocates space only whenever the content in the field is utilized. Preferably, space is allocated to a blob field in gigabytes); or
- Blockchain Hashes

As used in this disclosure, a hash refers to a mathematical hash of data. Such a hash may be created for example using an algorithm like SHA256.

Preferably, an API may be used to access the system. This enables the system to be easily integrated into existing software solutions. Preferably, the API can be used for the creation or look-up of a topic blockchain, a subtopic blockchain, or an event block, or for the management of permissions or notifications of a topic blockchain, a subtopic blockchain, or an event block.

As noted above the topic blockchain 110 is a blockchain of the topics T1, T2, ..., Tn relating to a subject. Each topic T1, T2, ..., Tn is preferably represented as a block 115 on the topic blockchain 110. For example, the blocks 115 in the topic blockchain 110 (which are referred to in this disclosure as topic blocks) may include: an open block 115-1a (which indicates the start of a new topic); a checkpoint block (which is used to create a record of the status of a topic at a particular time. This may be used e.g. to memorialize current subtopics for a topic without the subtopics immutable); a close block 115-1b (which is used to finalize a topic and make it and its subtopics immutable); or a revision block (a block used to revise a previous block related to the Topic).

Although a block in a blockchain is immutable (as a blockchain is append only), the close block describes and immortalizes a topic in the topic blockchain reaching its end state. This 'freezes' (i.e. locks) the state of any existing subtopic blockchain associated with the topic. To put it differently, once a close block has been added to close a topic on the topic blockchain, it is no longer possible to add event blocks to the subtopic blockchains associated with the topic.

However, a subtopic blockchain may be associated with more than one topic. In this case, the subtopic blockchain is locked when all the topics that is associated with are closed.

Once a topic has been closed, it can only be amended by opening a new topic and adding it to the topic blockchain, which is explicitly seen as an amendment to a previous topic - i.e. through the use of a revision block.

A topic block 115 represents a state of a topic blockchain, and preferably contains one or more of:
- a unique topic identifier (e.g. a universally unique identifier (UUID)) which can be used to identify or specify a topic on the topic blockchain;
- one or more primitive topic attributes which is used to store the basic attributes characterizing a topic, e.g. creation date, creating entity, other metadata, etc.
- subtopic hash, which is used to store a hash of a subtopic blockchain associated with a topic blockchain, thereby providing a cryptographic summary of the mutations or transactions within subtopic blockchain. In particular, the subtopic hash is used to store the hash of a genesis block of the subtopic blockchain associated with a topic blockchain. The genesis block is a block which provides the root of the subtopic blockchain and is described below in more detail.
- previous block hash, which is the hash of the previous block in the topic blockchain, which may be used to link blocks in a sequential, verifiable, chain.
- a topic data hash, which is used to store a hash of the data blob for a topic. This makes it possible to verify the integrity of the data relating to the topic. As a result, this topic data can be validated.

Each topic blockchain preferably comprises one or more subtopic blockchains. A subtopic blockchain is a blockchain that comprises blocks configured to record events of a subtopic related to the topic of the topic blockchain. A subtopic blockchain operates in parallel to the topic Blockchain. As such, a subtopic blockchain, creates a verifiable record of updates related to the topic's data or attributes.

A subtopic blockchain 120 comprises a genesis block 150 which is added to the open block 115-1a, 115-2a, ..., 115-na of its parent topic. The genesis block 150 is used to establish a binding relationship between the subtopic and its parent topic.

One or more subtopic blocks 130 may then be added to a subtopic blockchain 120 to record a discrete update or change to the sub-topic. For example, a new subtopic block 130 may comprise one or more of the following data types:
- A datetime - a datetime is a timestamp indicating when the new subtopic block was added to the subtopic block chain thereby changing the sub-topic.
- An operation type - an operation type is used to provide a description or code identifying the type of change made to the data in the subtopic blockchain by adding the new subtopic block (e.g., an update, a delete, a permission grant, access of a record, etc).
- A source identifier - a source identifier is used to identify an entity responsible for a change made by the addition of the new subtopic block to the data in the subtopic blockchain. For example, the source identifier may be used to identify a particular user, automated process, external source, etc. that is responsible for the change.
- New state data - the new state data is a data item used to specify the updated data of the subtopic or the new state of the subtopic caused by the addition of the new subtopic block.
- Previous Block Hash - a hash of the preceding block in the sub-topic, linking the new subtopic block to the preceding block(s) in a continuous sequence.
- Data Blob Hash - a hash of the new subtopic block's data blob. The data blob hash is used to ensure that a third party can easily identify when the details of each change caused by the addition of a new subtopic block have been tampered with. In particular, if a third party hashes the
new subtopic block's data blob and the resultant has does not match the data blob has then it is evident that the new subtopic block has been tampered with.

Each subtopic blockchain 120 may be used to record a set of Entries related to the Topic which are accessible to a subset of the entities who have access to the Topic. Entries are subtopic blocks with are used record events related to the topic. An Entries may contain data including but not limited to:
- State Change - a status change may be used to record any change in the topic blockchain's status, such as marking it as closed, completed, archived, etc.
- Attribute Modification - an attribute modification can be used to log changes to the topic blockchain's attributes, such as updating metadata, modifying tags, reclassifying the topic, etc.
- File Revisions - a file revision can be used to record a modification to a file (for example a document) associated with the topic blockchain as a subtopic block within the subtopic blockchain.
- Communication Log - a communication log can be used record one or more communications related to the topic of the topic blockchain. As a result, communications among entities relating to the topic can be captured, enabling a transparent audit trail of communications.
- Access Control Adjustment - an access control adjustment can be used to change the access permissions of each Topic and Sub-topic, including granting and revoking access to specific users or entities, are tracked in real time.
- Access Log - an access log can be used to record access to Topics, Sub-topics, or associated files. As a result, access to data can be tracked in real time.

The topic blockchain 110 is preferable configured such that its state may only change while it is Open. When a topic blockchain 110 moved to Closed it becomes immutable and cannot be changed. The closing of a Topic is recorded in a Close Block 115-1b on the Topic Blockchain 110. This state change also locks all Sub-topics 120-1-1, 120-1-2, ..., 120-1-n such that they also become immutable. Thus, the Close Block 115-1b ensures validity of all associated Sub-topics blocks 120-1-1, 120-1-2, ..., 120-1-n by itself containing the cryptographic hash of its associated Sub-topics blocks 120-1-1, 120-1-2, ..., 120-1-n.

Where it is desirable to allow independent verification of the completeness of the record for an Open topic 115-1 without closing it, a Checkpoint Block (not shown) may be added to the Topic Blockchain 110. The Checkpoint Block is used to record the current hashes of all sub-topics blockchains 120-1-1, 120-1-2, ..., 120-1-n for the topic blockchain 115-1 without making the topic blockchain 115-1 or the sub-topics blockchains immutable 120-1-1, 120-1-2, ..., 120-1-n.

A topic blockchain 110, may comprise one or more topics 115-1, 115-2, ..., 115-n which may be instantiated automatically with each Topic Blockchain 110. For example, a topic blockchain 110 may comprise an entity list. This topic is used to identify the entities that have permissions to access or update the topic blockchain 110. Each subtopic 120 related to this topic contains exactly one entry. The entry contains an a globally unique identifier for an entity that has permissions to access or update the topic blockchain. This globally unique identifier is referred to as an EntityGUID in the present disclosure. The Entry also maps the EntityGUID to other identifier(s) of the entity. Preferably, the Entry maps the EntityGUID to all the other identifier(s) of the entity. In the case of a natural person those identifiers might include Personal Data like name, address, email, phone, title, company, etc. Memorializing (i.e. recording) all the Personal Data in a single Entry which has no dependent Entries minimizes the loss of cryptographic validation that may occur e.g. in the event that the Entry must be removed from the blockchain, due, for example, to a request for deletion from a data subject under legislation like GDPR.

There are also types of subtopic blockchains 120 may apply to all topics, or all topics within a predetermined category. Such subtopic blockchains 120 should be instantiated automatically as a child subtopic 120 of a topic blockchain 110 on the creation of the topic blockchain 110 to which it applies.

For example, a permissions management subtopic blockchain 120 can be instantiated automatically to manage EntityGUIDs. In particular, the permissions management subtopic block 130 chain may be used to record additions, deletions, or changes to one or more of the EntityGUIDs of the entities who have access to the parent topic blockchain 110 and the child subtopic blockchain 120 associated with the parent topic blockchain 110.

As a further example, an access log subtopic blockchain 120 can be instantiated automatically to log access. In particular, the access log subtopic blockchain 120 may be used to log accesses to its parent topic blockchain 110. For example, each instance of data access to the parent topic blockchain 110 and its associated subtopic blockchains 120 may be recorded in an access log block. Preferably, the access log block comprises the datetime, data identifying the topic or subtopic that was accessed, EntityGUID of the entity that requested access, or any combination thereof.

Preferably a system in accordance may use a series of cryptographic hashes in the blocks of its constituent blockchains 115, 130. As a result, this creates a tamper-resistant, mathematically verifiable record for topic, sub-topic, and entry. By hashing each block's data, metadata, associated blobs, or any combination thereof and storing resultant hash value within the block, the system ensures that any modifications to the block's data is detectable through hash validation. When adding a block to the blockchain 110, 120, the hashes of preceding blocks may also be stored in the block (e.g. in the block's metadata). This provides a continuous, linked structure for both Topic and subtopic blockchains 110, 120, allowing the integrity of the entire chain to be verified. Further, a topic blockchain's 110 data store may be used to track one or more hashes of one or more sub-topics blockchains 120 associated with a topic blockchain 110 (i.e. the child sub-topics blockchains 120 of the topic blockchain 110). This creates a cross-reference that allows users or automated processes to verify the completeness and integrity of all changes within a topic blockchains's 110 lifecycle.

Upon the addition of each new entry to a topic blockchain 110, the users of the topic blockchain 110 may receive notification. Preferably, the notification is an automated electronic notification transmitted from the system. The notification may be sent in the form of email, SMS, instant message, or the like. Preferably, the notification contains an abstract of the data from the new block along with the hash of the new block. This provides the users of the topic with a contemporaneous independent record of each new block in the topic blockchain 110 and a method to verify the subsequent records of the same block within the system.

Similarly, upon the addition of each new entry to a subtopic topic blockchain 120, the users of the subtopic blockchain 120 may receive notification. Preferably, the notification is an automated electronic notification transmitted from the system. The notification may be sent in the form of email, SMS, instant message, or the like. Preferably, the notification contains an abstract of the data from the new block along with the hash of the new block. This provides the users of the subtopic blockchain 120 with a contemporaneous independent record of each new block and a method to verify the subsequent records of the same block within the system.

As previously noted, the users of the subtopic blockchain 120 may differ from the users of its parent topic blockchain 110. As such a notification sent in relation to a topic blockchain 110 may have different recipients to a notification sent in relation to a subtopic blockchain 120 which is a child of the topic blockchain 110. Aside from this difference, the notification for a topic blockchain 110 and a child subtopic blockchain 120 may be identical. I.e. the notification is sent by the same means and contains an abstract of the data from a new block added to either the topic blockchain 110 or to a child sup-topic blockchain 120 along with the hash of the new block.

Preferably, then system enables a user to validate a file on their local device. To put it differently, the system preferably allows a user to confirm that a version of a file they have obtained is unaltered from a version memorialized on the System. Validation may be performed by calculating the hash of the local file. This calculated hash does not need to be recorded by the system, so the step of calculating preferably does not include uploading the calculated hash. The calculated hash is compared with hashes within the blocks 115 of the topic blockchain(s) 110 to which the user has access (preferably including the blocks 130 of the child subtopic blockchain(s) 120 to which the user has access). If the calculated hash matches a hash within the one or more blocks 115, 130, the system is configured to display a list of the topic blockchains 110 (and/or the subtopic blockchains 120) which contain a file with the matching hash. As a result, the system confirms to the user that the file in their possession is an unaltered version of the file. Furthermore, by displaying which blocks 115, 130 within the blockchain 100 match the hash, the system confirms to the user whether or not the version of the file in their possession is the most up-to-date version of the file.

According to the present disclosure, a topic blockchain 110 (and its child subtopic block chain(s) 120) are append-only. I.e. once a block has been added, it cannot be edited or deleted. As a result, an error found in an existing block in the blockchain 100 can only be corrected or revised through the addition of a new block to the same chain (in the present disclosure, this new block is referred to as a revision block). This revision block (not shown) is configured to reference the block comprising the error. The revision block also contains details of the corrections needed to correct the error. By including a pointer to the erroneous block, the revision block provides a mechanism to memorialise a revision to a previous block. Further, metadata to the changes made by the revision block may also be memorialised using the revision block. For example, the data stored in the revision block may comprise one or more of: the datetime of the revision or correction, entity who posted the revision or correction, the reason for the revision or correction, etc.

Preferably, when displaying a block which has been revised or corrected, the block is shown with the subsequent revision block(s) that were used to correct or revise the block. This enables a user to see the most recent versions of the data that has been revised or corrected. Furthermore, this provides a mechanism for displaying a history of revisions to that Block.

Blocks 115, 130 within a blockchain 100 to which a user has access may be displayed by the system to the user as icons. Different types of blocks may be displayed with different icons. In particular, each update (i.e. the addition of a new block) to any topic or subtopic blockchain 110, 120 to which a user has access may be displayed or made available to the user through a system display (which may be provided e.g. by a web application, mobile application or other suitable interface).

Preferably, validation of data may be performed through a user interface of a system in accordance with the present disclosure. More preferably, validation may performed via a "one-click" subsystem. Further, the display of a block 115, 130 may also include a verification seal indicative of the block being verified. The verification seal may be represented an icon or other suitable visual indicator (e.g. by changing the colour of the icon used to display the block). Preferably, the verification seal is provided with a tooltip, an accordion menu or an overlay or any combination thereof. Preferably, the verification seal comprises a hash of associated Block 115, 130. The Verification Seal may also be displayed as a notification as part of any display of notifications provided by system.

Preferably, the verifications seal has two visually distinct states. In particular, a first visual state to confirm validation, and a second visual state (distinct from the first visual state) which provides an alert the user of a failure to validate a block (which is indicative of a violation of data integrity of the block).

A system according to the present disclosure may be configured to provide an algorithm for validating the hashes to the user's device. Such an algorithm allows the validation computation to be performed locally. The result of the computation may be displayed via the Verification Seal. By performing validation locally, the computational load on the System is reduced. Further, the user is provided with independent confirmation of data integrity.

A hash may be additionally or alternatively verified by the user against their own record of the hash from the previously described notification of a change sent to them by the system.

Upon a further click or interaction with the verification seal, an associated subtopic may be displayed to the user. The associated subtopic is the subtopic comprising the blockchain records of mutation to data verified by the verification seal.

The System may be further configured to allow a user to download (e.g. in a simple structured electronic form - such as a CSV file) the entire Topic Blockchain and any Sub-topics to which the user has access in order that the user may verify the hashes using a hash calculator of their own choice. This allows users who do not trust the validation algorithm served by the System to use a hash calculator they trust.

The foregoing detailed description of the invention has been presented for purposes of illustration and description. It is not intended to be exhaustive or to limit the invention to the precise forms disclosed. Many modifications and variations will be apparent to those of ordinary skill in the art without departing from the scope and spirit of the invention. The embodiments were chosen and described in order to best explain the principles of the invention and its practical applications, thereby enabling others of ordinary skill in the art to understand the invention for various embodiments and with various modifications as are suited to the particular use contemplated.

It is therefore intended that the scope of the invention be defined by the claims appended hereto and their equivalents. All structural, functional, and procedural equivalents to the elements of the embodiments described herein are intended to be encompassed by the invention. Furthermore, it is contemplated that features from one embodiment can be combined with features of another embodiment to create still further embodiments without departing from the spirit and scope of the invention.

## Claims

1. A computer-implemented method for managing data comprising:
appending a block to a centralised topic block-chain wherein:
the appended block comprises a hash of the preceding block;
the appended block is a genesis block; and
the genesis block is the first block in a subtopic block-chain relating to an attribute of the topic block-chain, wherein the subtopic block-chain provides a parallel and hierarchical record structure of event blocks, whereby:
the centralised topic block-chain is used to store topic-level records and serves as the root of the hierarchy; and
the subtopic block-chain is used to store topic-level records of events relating to an update of an attribute of a topic provide a verifiable record of the updates to the attribute.

2. The method of claim 1, wherein a plurality of genesis blocks are appended to the same block in the centralised topic block-chain wherein each genesis block relates to a different attribute of the same topic.

3. The method of any preceding claim, wherein a block in the centralised topic block-chain comprises a unique identifier configured to identify the topic.

4. The method of any preceding claim, wherein a block in the centralised topic block-chain comprises one or more attributes of the topic.

5. The method of claim 4, wherein the attributes comprise one or more of:
changes in the topic's status,
one or more communications between entities regarding the topic,
a digital file, including any revision thereof associated with the topic,
data identifying the portion of topic data being shared,
data identifying the entity who granted access,
data identifying the entity who received access,
data identifying the reason rational for sharing,
data identifying one or more instances of access to the shared data, or
data identifying revocation of access to the shared topic data.

6. The method of claim 4 or 5, comprising adding a subtopic block to a subtopic block chain, wherein the subtopic block comprises a hash of the previous subtopic block, and the subtopic block comprises an event relating to the attribute of the topic, whereby the subtopic block provides a a log of events, such as state changes, data updates, and permissions modifications.

7. The method of any preceding claim, comprising adding a close block to the topic blockchain wherein the close block is configured to make topics and the one or more subtopics in the topic block chain immutable.

8. The method of any preceding claim, comprising adding a checkpoint block to the topic blockchain wherein the checkpoint block is configured to provide a record of the status without making topics and the one or more subtopics in the topic block chain immutable.

9. The method of any preceding claim, comprising providing a verification seal for blocks, providing a visual indicator of data integrity wherein the verification seal verifies that the hash of a block matches the hash of the next block in the blockchain.

10. The method of any proceeding claim comprising providing a notification to the user of a blockchain of the addition of a block the blockchain wherein the blockchain is either a topic or subtopic blockchain.

11. The method of any preceding claim where a topic blockchain has a first set of users and a subtopic blockchain related to the topic block chain has a second set of users wherein the first set of users does not match the second set of users.

12. A data processing system comprising means for carrying out a method according to any preceding claim.

13. A computer program comprising instructions which, when executed by a computer, cause the computer to perform a method according to any one of claims 1-12.

14. A computer-readable storage medium or a data carrier comprising instructions which, when executed by a computer, cause the computer to perform a method according to any one of claims 1-12.
